# EUROPÄISCHE PATENTSCHRIFT

(11) **EP 4 042 112 B1**
(45) Veröffentlichungstag und Bekanntmachung des Hinweises auf die Patenterteilung: **19.11.2025**
(21) Anmeldenummer: 20789567.3
(22) Anmeldetag: 08.10.2020
(51) Int. Cl.: G01D 5/14, G01D 5/245, G01D 5/246

(54) **MESSANORDNUNG**
MEASURING ARRANGEMENT
SYSTÈME DE MESURE

(30) Priorität: 08.10.2019 DE 102019126987
(43) Veröffentlichungstag der Anmeldung: 17.08.2022
(73) Patentinhaber: Bogen Magnetics GmbH, 14163 Berlin (DE)
(72) Erfinder: BECKER, Torsten, 14109 Berlin (DE)
(74) Vertreter: PATERIS Patentanwälte PartmbB
(86) Internationale Anmeldenummer: PCT/EP2020/078212
(87) Internationale Veröffentlichungsnummer: WO 2021/069546

(56) Entgegenhaltungen:
- EP-A1- 0 723 136
- EP-A1- 0 915 319
- EP-A1- 2 846 126
- DE-A1- 102005 055 905
- DE-A1- 102017 121 524
- US-A1- 2018 306 601

## Beschreibung

Die Erfindung betrifft eine Messanordnung aufweisend wenigstens ein Messobjekt, einen Maßstab, einen Messsensor und eine Auswerteeinheit nach dem Oberbegriff des Anspruchs 1.

Derartige Messanordnungen sind aus dem Stand der Technik bekannt. So ist es beispielsweise bekannt, bei einem Messschieber (Schiebelehre) einen Maßstab am Messschiebergrundkörper anzubringen, der von einem Messsensor ausgelesen wird. Mittels einer Auswerteeinheit werden die ausgelesenen Messsensordaten z. B. an einem Display angezeigt. Als Messobjekt dient dabei ein gegenüber dem Messschiebergrundkörper verschiebliches Schieberteil, mit dem der Messsensor fest verbunden ist. Bei Betätigen des Schiebeteils wird der Messsensor gegenüber dem Maßstab mitbewegt.

Eine derartige Messanordnung hat sich bewährt.

Des Weiteren ist es aus dem Stand der Technik bekannt, beispielsweise bei einem Pneumatik- und/oder Hydraulikzylinder am Gehäuse des Zylinders einen Magnetsensor anzubringen, welcher das Annähern, Vorbeibewegen oder Anwesendsein eines metallischen (magnetischen) Gegenstandes im Inneren des Zylinders detektieren kann. Dieser metallische Gegenstand ist üblicherweise ein Kolbenelement des hydraulischen und/oder pneumatischen Zylinders, dessen Bewegung entlang einer Längsrichtung mit einer Bewegung einer Kolbenstange des Zylinders korrespondiert. Somit kann durch Detektion des im Inneren des Zylinders beweglichen Bauteiles mittels eines außerhalb des Zylinders angeordneten Sensors eine Aussage über die relative Lage einer Kolbenstange zum Zylinder getroffen werden. Derartige Sensoren werden üblicherweise als Endabschalter oder Endstellungserkennungssensoren eingesetzt.

Es ist aus dem Stand der Technik bekannt, dass in einen Zylinder eine Vielzahl runder (Stab-)magnete mit einer abwechselnden Nord-Südpol-Magnetisierung in Längsrichtung des Zylinders eingelegt wird. Mit einem Sensor wird die Bewegung des Kolbens ermittelt. Damit kann eine von der Längsachse L abweichende Bewegung, z. B. eine Rotation in einer Umfangsrichtung UR, ermittelt werden. Diese Anwendung funktioniert gut für lange Stangen und kleine Durchmesser.

Aus der EP 2 846 126 A1 ist eine Messvorrichtung und ein Verfahren zum Messen der Position von Körpern bekannt.

Aus der EP 0 723 136 A1 ist eine Messeinrichtung für einen Drehwinkel bekannt.

Aus der EP 0 915 319 A1 ist ein verlagerbarer Körper und Detektionsmittel zur Erfassung seiner Position bekannt.

Aus der US 2018 / 0306601 A1 ist eine Positioniereinrichtung zum Bestimmen der Position eines verlagerbaren Werkzeugs einer Werkzeugmaschine bekannt.

Aus der DE 10 2017 121 524 A1 ist eine weitere Messeinrichtung bekannt.

Aus der DE 10 2005 055 905 A1 ist eine Längenmessanordnung mit einem magnetischem Maßstab mit gegenläufiger Magnetisierung bekannt.

Aufgabe der Erfindung ist es, eine Messanordnung anzugeben, mit der ein Messobjekt, welches einen Maßstab trägt, zuverlässig ausgelesen und/oder in seiner Lage bestimmt werden kann, auch wenn das Messobjekt eine von der Längsachse L abweichende Bewegung, z. B. eine Rotation in einer Umfangsrichtung UR durchführt.

Insbesondere soll es möglich werden, ein um eine Längsachse rotierendes oder sich ein Stück weit drehendes, rotationsförmiges Messobjekt trotz dessen Verdrehung hinsichtlich seiner zu erfassenden Lage zuverlässig zu bestimmen.

Des Weiteren ist es Ziel der Erfindung, Messobjekte mit einer gegenüber ihrer sonstigen flächigen, relativ geringen Ausdehnung in der Längsrichtung entlang der Längsachse L zuverlässig erfassen zu können.

Diese Aufgaben werden mit einer Messanordnung mit den Merkmalen des Anspruchs 1 gelöst. Vorteilhafte Ausführungsformen sind in den nachfolgenden Unteransprüchen angegeben.

Eine Messanordnung weist auf: wenigstens ein Messobjekt, einen Maßstab, einen Messsensor und eine Auswerteeinheit, wobei das Messobjekt entlang einer Längsrichtung **LR** eine Längsachse L aufweist, der Maßstab, ein magnetisches Muster entlang einer Längsrichtung **LR** des Messobjekts ist und der Messsensor ausgebildet und eingerichtet ist, das magnetische Muster zumindest teilweise in ein Sensorsignal umzuwandeln, so dass aus dem Sensorsignal mittels der Auswerteinheit ein Messwert erzeugbar ist, dadurch gekennzeichnet, dass das magnetische Muster sich in einer Umfangsrichtung **UR** wenigstens über einen Winkelbereich s_{α} auf einer dem Messsensor zugewandten Seite des Messobjekts erstreckt, wobei zur Bildung des Winkelbereichs s_{α} ein Winkel α mindestens derart groß gewählt ist, dass bei einer Rotation des Messobjekts um den Winkel α um seine Längsachse L das magnetische Muster vom Messsensor erfassbar ist. Dabei ist das magnetische Muster aus einer magnetischen Tinte gebildet und das magnetische Muster ist aus umlaufenden Linien auf einer Außenseite des Messobjekts gebildet. Erfindungsgemäß sind Linien des magnetischen Musters gegenüber einer Ebene senkrecht zur Längsachse des Messobjekts mit zueinander unterschiedlichen Winkeln β, β1, β2, β3, β4 angeordnet.

Durch die zueinander unterschiedlichen Winkel β, β1, β2, β3, β4 usw. kann eine Absolutmessung durchgeführt werden, die anhand unterschiedlicher Winkel zwischen den das magnetische Muster bildenden Musterelementen eine absolute Lage erkennen kann.

Mit der Erfindung kann in besonders bevorzugter Art und Weise eine kontaktlose und/oder kontaktbehaftete Messung einer örtlichen Lage des Messobjekts erfolgen, auch wenn das Messobjekt in einer Umfangsrichtung UR bezüglich seiner Längsachse L verdrehbar ist. Dies kann eine absichtliche Verdrehbarkeit, wie z. B. bei einem Drehkolben, einer Gewindestange oder bei einem Spindelelement sein. Die

Verdrehung kann allerdings auch eine unbeabsichtigte Verdrehung während des Betriebs sein, beispielsweise wenn eine Kolbenstange eines Pneumatik- und/oder Hydraulikzylinders oder einer andersartigen Aktuatoreinrichtung sich im Betrieb ungewollt um ihre Längsachse L dreht. Trotz allem wird die erfindungsgemäße Messanordnung in der Lage sein, insbesondere die axiale Lage des Messobjekts, d. h. dessen Position in Bezug auf die Längsrichtung LR, welche parallel zur Längsachse L ausgerichtet ist, zu ermitteln.

Insbesondere für den Einsatz von qualitativ hochwertigen, d. h. besonders glatten Oberflächen ist die erfindungsgemäße Messanordnung geeignet, weil beispielsweise das magnetische Muster direkt auf die Oberfläche aufgebracht werden kann, ohne deren Höhenkontur merklich zu beeinflussen. Zudem ist es aufgrund der magnetischen Kopplung zwischen dem magnetischen Muster und dem Messsensor möglich, das magnetische Muster nach dessen Aufbringen auf eine Oberfläche des Messobjekts abzudecken. Dies kann beispielsweise optisch nicht sichtbar mittels einer Lackschicht oder einer Beschichtung geschehen. Geeignet ist auch eine Abdeckung durch Folien oder dergleichen.

In einer bevorzugten Ausführungsform ist der Messsensor ein magneto-resistiver, ein magneto-induktiver, ein Hall-, ein Squid-Sensor oder eine andere magnetische Messlösung. Infrage kommen Saturationskern-Matrix-Sensoren, Förstersonden oder ein Lorenzkraft-Magnetometer/-sensor.

Derartige Messsensoren eignen sich insbesondere für die erfindungsgemäße Messanordnung. Insbesondere können derartige Sensoren zur Sensierung des Messobjekts, bzw. des hierauf angebrachten Maßstabes dienen, ohne dass eine Relativbewegung zwischen dem Messobjekt und dem Sensor zwingend notwendig ist.

In einer weiter besonders bevorzugten Form ist das Messobjekt stabartig, stangenartig, z. B. ein Rundstab, insbesondere eine Kolbenstange einer Linearzylindereinrichtung, oder scheibenartig, z.B. der Kolben eines Zylinders oder einer Dosierpumpe.

Grundsätzlich ist die erfindungsgemäße Messanordnung für beliebig geformte Körper geeignet. In besonders bevorzugter Form eignet sich die erfindungsgemäße Messanordnung für stab-, stangen- oder scheibenartige Elemente, die z. B. entlang ihrer Längsachse relativ verlagert werden, und diese Verlagerung messtechnisch erfasst werden soll.

Es ist vorteilhaft, dass das magnetische Muster auf einer freien Außenseite des Messobjekts aufgebracht ist.

Hierbei handelt es sich um eine besonders gut zugängliche und zur Kopplung mit dem Messsensor geeigneten Anbringungsort des magnetischen Musters, das den Maßstab bildet.

Zweckmäßigerweise kann das magnetische Muster aus einer magnetischen Tinte gebildet sein.

Eine magnetische Tinte ist insbesondere dafür geeignet, auf besonders glatte, z. B. an anderer Stelle dichtend wirkende Oberflächen, wie z. B. einer Kolbenstange eines Pneumatik- und/oder Hydraulikzylinders angebracht zu werden, da ein Höhenauftrag bzw. eine Beschichtungsdicke vernachlässigbar klein ist. Jedenfalls ist sie so klein, dass sie andere Funktionen nicht oder unwesentlich beeinträchtigt.

In einem weiter bevorzugten Beispiel kann das magnetische Muster mit einer Abdeckschicht überdeckt sein. Diese Ausführungsform der Erfindung eignet sich zur optisch unsichtbaren Anbringung eines Maßstabes.

In einer weiterhin bevorzugten Ausführungsform kann der Winkel α größer oder gleich gewählt sein als ein maximal im Betrieb des Messobjekts auftretender Verdrehwinkel αₘₐₓ um die Längsachse L.

Zur Sicherstellung, dass während aller möglicher Betriebsphasen und Betriebsstellungen ein zuverlässiges Ablesen des Maßstabes durch den Messsensor erfolgt, ist es zweckmäßig, den Winkel α größer oder gleich zu wählen als ein maximal in Betrieb auftretender Verdrehwinkel αₘₐₓ des Messobjekts um dessen Längsachse L, d. h. zum Beispiel in der Umfangsrichtung UR.

Besonders vorteilhaft ist es, wenn der Winkel α 360° beträgt.

Für gegebenenfalls rotierende Messobjekte, d. h. Messobjekte, die sich in mehr als 360° in Umfangsrichtung verdrehen, ist es zweckmäßig, den Maßstab bzw. die den Maßstab bildende Elemente umlaufend mit einem Winkel von 360° um das Messobjekt herum anzubringen.

Zweckmäßigerweise kann das magnetische Muster aus umlaufenden Linien auf einer Außenseite des Messobjekts gebildet sein. Diese Maßnahme stellt eine besonders geeignete Ausführungsform des umfänglichen Anbringens des Maßstabes auf dem Messobjekt dar.

In einer weiteren vorteilhaften Ausführungsform können die Linien des magnetischen Musters gegenüber einer Ebene senkrecht zur Längsachse L des Messobjekts geneigt oder individuell geneigt, z. B. um einen Winkel β, β₁, β₂, β₃, β₄ usw. angeordnet sein.

Zur Anpassung an bestimmte Gegebenheiten, sei es Positionierung des Messsensors und/oder Blickwinkel des Messsensors, kann es zweckmäßig sein, die Elemente, die das magnetische Muster bilden, um einen Winkel β zu neigen.

In der erfindungsgemäßen Messanordnung können bevorzugt Linien des magnetischen Musters gegenüber einer Ebene senkrecht zur Längsachse L des Messobjekts mit einem konstanten oder zueinander unterschiedlichen Winkeln angeordnet sein.

Insbesondere bevorzugt ist das magnetische Muster aus mindestens einer Linie gebildet. Dies stellt das erfindungsgemäß verwendbare, einfachste magnetische Muster zur Verwendung als Maßstab für die erfindungsgemäße Messanordnung dar.

Zweckmäßigerweise kann der Messsensor als Ringsegment- oder Ringsensor ausgebildet sein, welcher in Umfangsrichtung UR um das Messobjekt wenigstens einen Bereich, der in Umfangsrichtung UR gesehen größer oder gleich ist als der Winkelbereich S_{αmax}, überdeckt.

Eine Ausbildung des Messsensors als Ringsensor oder in Umfangsrichtung als Ringsegmentsensor kann helfen, den Ablesebereich und den möglichen Verdrehbereich des Messobjekts relativ zum Sensor zu vergrößern.

Bevorzugterweise hat das Muster gleichmäßige oder ungleichmäßige Abstände, wie z. B. Linien, zwischen den das magnetische Muster bildenden Musterelementen. Diese Maßnahme dient ebenfalls der erleichterten absoluten Lagemessung des Messobjekts und hilft zudem auch bei einer inkrementellen Messung als Kontrollfunktion der entsprechenden Positionsunterschiede, die gegebenenfalls in einem Speicher (nicht gezeigt) in einer Ausweiteeinheit abgelegt sind.

In einer weiteren vorteilhaften Ausführungsform kann das Muster aus wenigstens einem Musterelement gebildet sein, welches z. B. eine Linie, ein Punkt, ein Ring oder eine andersartig geartete Markierung sein kann.

Als das wenigstens eine Musterelement, welches das magnetische Muster bildet, eignet sich eine Linie, ein Punkt oder eine anders geartete flächige Markierung, beispielsweise ein Dreieck, Kreise oder dergleichen. Auch können unregelmäßig geformte Musterelemente nützlich sein.

Vorteilhafterweise können die Musterelemente gleichmäßige oder ungleichmäßige Breiten B haben, wobei eine Breite B eine Erstreckung des wenigstens einen Musterelements in Richtung der Längsachse L ist.

Insbesondere eine ungleichmäßige Breite B der einzelnen Musterelemente kann helfen, beispielsweise die Verdrehposition des Messobjekts um deren Längsachse L zu ermitteln. Dies kann beispielsweise anhand einer Breitenermittlung der Breite B erfolgen, die gegebenenfalls dann einer entsprechenden Drehposition des Messobjekts zugeordnet ist.

Im Folgenden wird die Erfindung beispielhaft anhand der Zeichnung näher erläutert. Es zeigen:
- Figur 1:: stark schematisiert eine beispielhafte Ausführungsform der erfindungsgemäßen Messanordnung am Beispiel einer Kolbenstange eines Zylinderaktuators;
- Figur 2:: eine Ansicht einer zylindrischen Kolbenstange aufweisend ein magnetisches Muster zur Verwendung als Messobjekt gemäß der Erfindung;
- Figur 3:: eine weitere Ausführungsform eines zur Verwendung bei der erfindungsgemäßen Messanordnung geeigneten Messobjekt, beispielsweise ein scheibenartiges Messobjekt, z. B. eine Beilagscheibe, eine Abschlussscheibe oder dergleichen;
- Figur 4:: eine weitere Ausführungsform eines zur Verwendung in der erfindungsgemäßen Messanordnung geeigneten magnetischen Musters, wobei Musterelemente, die das magnetische Muster bilden, zur Längsachse L des Messobjekts unterschiedliche Winkel β, β₁, β₂, β₃, β₄... einschließen.

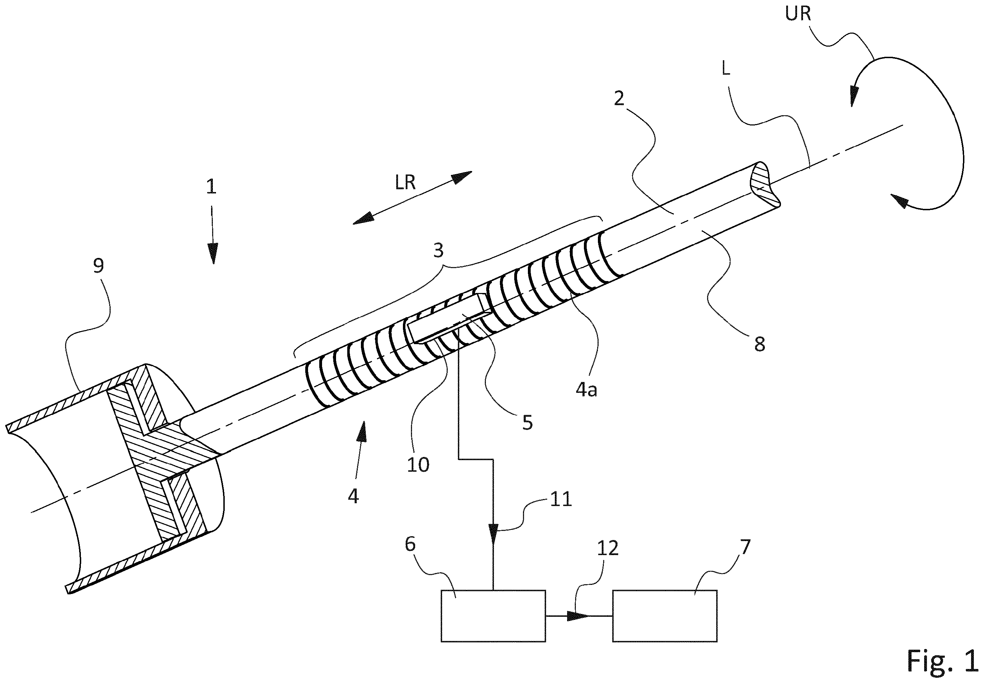

Figur 1 zeigt stark schematisiert eine Ausführungsform der erfindungsgemäßen Messanordnung 1.

Die Messanordnung 1 weist ein Messobjekt 2 auf, auf dem an geeigneter Stelle ein Maßstab 3 angebracht ist. Der Maßstab 3 ist als ein magnetisches Muster 4 ausgebildet, wobei das magnetische Muster 4 aus einer Vielzahl von das magnetische Muster 4 bildenden Musterelementen 4a gebildet ist.

Dem Maßstab 3 ist örtlich in geeigneter Art und Weise angeordnet und einem Messsensor 5 zugeordnet.

Der Messsensor 5 steht mit einer Auswerteeinheit 6 in Verbindung. Die Auswerteeinheit 6 kann mit einer Anzeigeeinheit 7 verbunden sein. Die Anzeigeeinheit 7 kann auch beispielsweise integral in der Auswerteeinheit 6 eingebunden sein, oder die Messdaten können als Eingangsinformationen für eine Positionier- oder Bewegungssteuerung verwendet werden.

Als Messobjekt 2 zeigt Figur 1 ein Beispiel einer Kolbenstange 8 eines Zylinderaktuators 9, z. B. eines Hydraulikzylinders oder eines Pneumatikzylinders. Das Messobjekt 2 in der Ausführungsform gemäß Figur 1, in Form der Kolbenstange 8, besitzt eine Längsachse L und ist in einer Längsrichtung **LR** parallel zur Längsachse L örtlich verlagerbar.

Das Messobjekt 2 ist in einer Umfangsrichtung **UR** um die Längsachse L rotierbar verlagerbar. Diese Verlagerbarkeit kann hinsichtlich des Winkelbereiches in Umfangsrichtung **UR** begrenzt oder unbegrenzt sein.

Der Sensor 5 empfängt beim Vorbeibewegen des Maßstabs 3 an dessen sensierender Unterseite 10 magnetische Informationen und setzt diese in ein Sensorsignal 11 um, welches in der Figur 1 mit einem Pfeilsymbol dargestellt ist. Das Sensorsignal 11 wird zur Auswerteeinheit 6 geleitet und dort in im Wesentlichen bekannter Art und Weise weiterverarbeitet.

Die Auswerteeinheit 6 generiert aus dem Sensorsignal 11 einen Messwert 12, welcher in Figur 1 auch mit einem Pfeilsymbol dargestellt ist, und leitet diesen Messwert 12 beispielsweise an die Anzeigeeinheit 7 weiter.

Die Musterelemente 4a erstrecken sich über einen Winkel α in Umfangsrichtung **UR** über die Oberseite des Messobjekts 2, so dass sie einen Winkelbereich s_{α} abdecken.

Der Winkelbereich s_{α} ergibt in Abhängigkeit der Sensiereigenschaften des Messsensors 5 einen maximalen Winkelbereich s_{αmax}, der gegebenenfalls größer sein kann als der Winkelbereich s_{α}, beispielsweise wenn der Messsensor 5 in der Lage ist, ein nur teilweise in die Unterseite 10 hineinragendes Musterelement 4a als solches zuverlässig zu detektieren.

Der Winkelbereich s_{αmax} ist dabei der maximal zulässige Verdrehbereich, um den das Messobjekt 2 rotieren darf, damit bei gegebenem Winkelbereich s_{α}, also einer gegebenen Erstreckung der Musterelemente 4a in Umfangsrichtung **UR** noch eine zuverlässige Detektion der Musterelemente 4a durch den Messsensor 5 erfolgen kann.

Als Messsensor 5 eignen sich insbesondere Messsensoren 5, die unabhängig von einer, eine elektrische Induktion auslösenden Relativbewegung Magnetismus detektieren können. Hierzu gehören insbesondere magneto-resistive Sensoren wie auch magneto-induktive Sensoren, Hallsensoren, Squid-Sensoren, Saturationskern-Matrix-Sensoren (Förstersonden) oder ein Lorenzkraft-Magnetometer/-sensor. Die Sensoren können hinsichtlich ihrer Bauart einzelne Sensorelemente oder z. B. aus Sensorelementen gebildete Linien- und/oder Matrixsensoren sein.

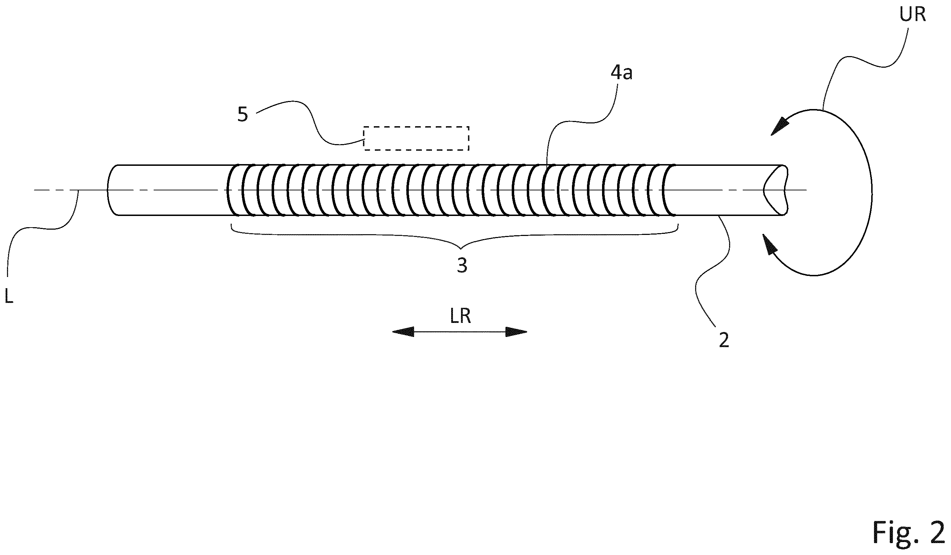

Figur 2 zeigt eine weitere Ausführungsform eines zur Verwendung bei der erfindungsgemäßen Messanordnung geeigneten Messobjekts 2. Dieses Messobjekt 2 ist ebenfalls eine zylindrische Stange und weist als magnetisches Muster 4 ein regelmäßiges vollumfängliches Streifenmuster auf. Dieses Streifenmuster bildet den Maßstab 3. Jeder einzelne Streifen des Streifenmusters stellt ein Musterelement 4a dar.

Alle Musterelemente 4a oder wenigstens eine Auswahl der Musterelemente 4a sind beispielsweise mit magnetischer Tinte auf dem Messobjekt 2 aufgebracht.

Eine derartige Ausgestaltung eines Messobjekts 2 ermöglicht mit der erfindungsgemäßen Messanordnung eine Lageerfassung des Messobjekts 2 in Längsrichtung LR, unabhängig von einer Drehlage des Messobjekts 2 in dessen Umfangsrichtung UR. Somit ist es egal, in welcher umfänglichen Position, d. h. in welcher Position in Umfangsrichtung UR, sich das Messobjekt 2 befindet. Durch die umlaufenden Musterelemente 4a ist jedenfalls sichergestellt, dass ein Messsensor 5 (gestrichelt dargestellt in Figur 2) in seinem Detektierbereich eine ausreichende Menge und/oder Dichte von Musterelementen 4a vorfindet, um eine zuverlässige Detektion sicherzustellen.

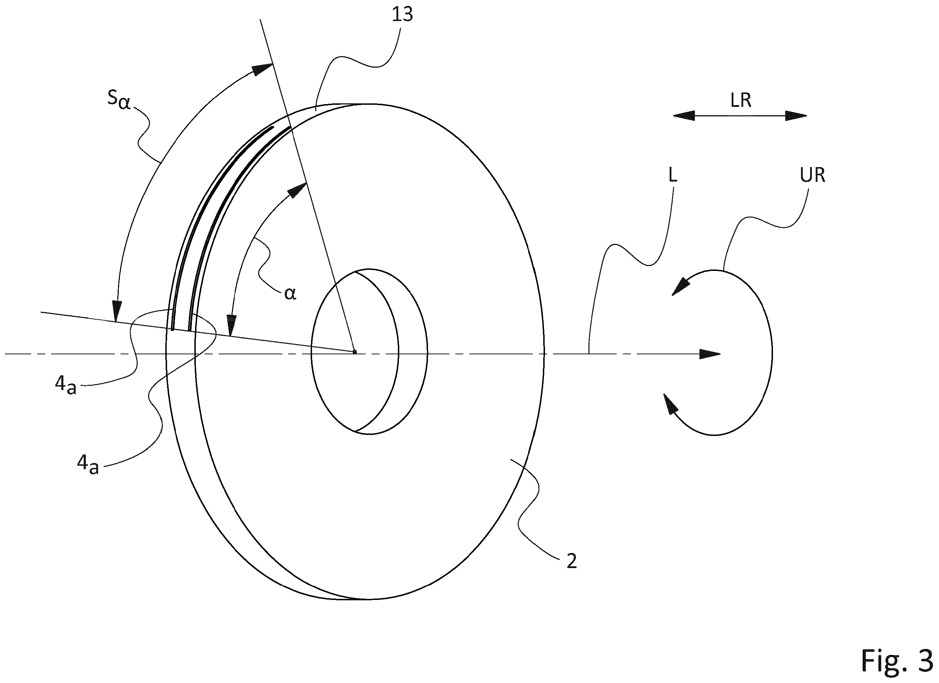

Figur 3 zeigt eine weitere Ausführungsform eines Messobjekts 2, welches zur Verwendung in der erfindungsgemäßen Messanordnung 1 geeignet ist. Das Messobjekt 2 dieser Ausführungsform ist beispielsweise als eine Scheibe ausgebildet. Die Scheibe besitzt die Längsachse L und ist um diese in Umfangsrichtung UR rotationssymmetrisch gebildet.

Über einen Winkel α hinweg, d. h. über einen Winkelbereich s_{α} hinweg, sind auf einer freien Außenseite 13 die Musterelemente 4a angeordnet. Im dargestellten Beispiel handelt es sich hierbei lediglich um in Längsrichtung LR aufeinanderfolgende zwei Musterelemente 4a. Mit derartigen Musterelementen 4a ist beispielsweise eine Endposition in der einen und in der anderen Richtung entlang der Längsrichtung LR detektierbar, wenn sich das Messobjekt 2 gemäß Figur 3 in der Ausführungsform als Scheibe entlang der Längsachse L verlagert.

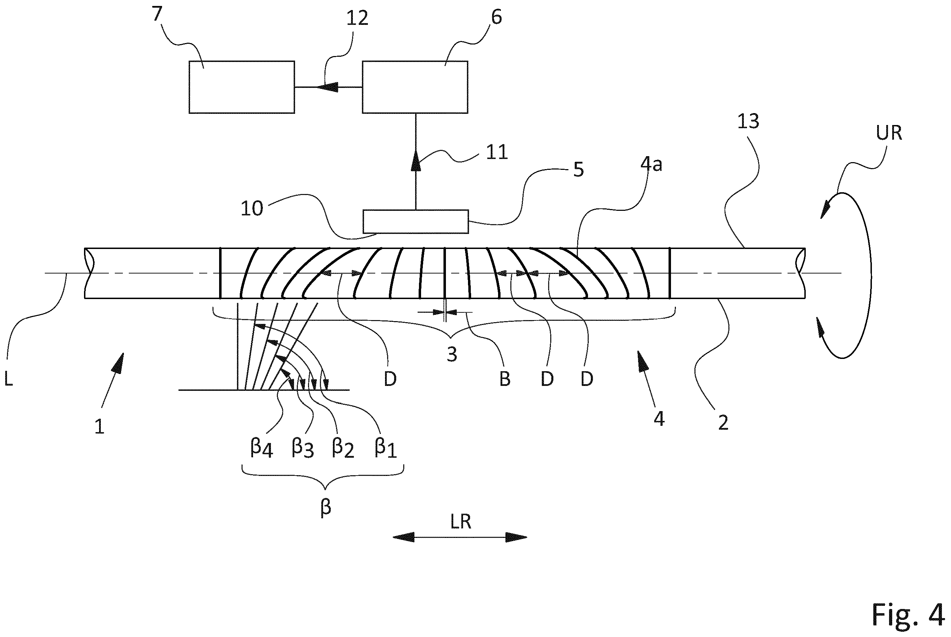

Figur 4 zeigt eine zweite Ausführungsform der erfindungsgemäßen Messanordnung 1 ebenfalls am Beispiel eines stangenartig ausgebildeten Messobjekts 2, vergleichbar zur ersten Ausführungsform der erfindungsgemäßen Messordnung 1 gemäß Figur 1.

Der prinzipielle Aufbau der Messanordnung 1 gemäß Figur 4 entspricht im Wesentlichen dem Aufbau der Messordnung 1 gemäß Figur 1. Gleiche Gegenstände/Bestandteile sind daher mit gleichen Bezugszeichen versehen. Die Ausführungsform der Messordnung 1 gemäß Figur 4 unterscheidet sich hinsichtlich der Ausgestaltung des Maßstabs 3 in Bezug auf die Anordnung der Musterelemente 4a, die das magnetische Muster 4 bilden, vom Ausführungsbeispiel gemäß Figur 1.

Die Vielzahl von Musterelementen 4a sind entlang der Längsrichtung **LR** derart angeordnet, dass jedes der Musterelemente 4a einen Winkel β zur Längsachse L einschließt, wobei der Winkel β beispielsweise der Winkel zwischen einer Tangente an eine vorbestimmte Stelle des Musterelements 4a und der Längsachse **LR** projiziert auf die Zeichenebene, z. B. gemäß einer Seitenansicht nach Figur 4 ist.

Die unterschiedlichen Musterelemente 4a können unterschiedliche Winkel β, z. B. Winkel β₁, β₂, β₃, β₄ mit der Längsachse L einschließen. Die Winkel β₁, ... β₄ können beispielsweise entlang einer Längsrichtung **LR** von einem Musterelement 4a zum nächsten Musterelement 4a zunehmen, danach beispielsweise über eines oder mehrere Musterelemente 4a hinweg konstant bleiben, um im weiteren Verlauf gegebenenfalls über ein oder mehrere Musterelemente 4a hinweg abzunehmen. Die Abfolge der Winkel β₁, ... β₄, ... βₙ kann periodisch oder beliebig sein. Eine Information über den Ablauf der Winkelfolgen ist zweckmäßigerweise in der Auswerteeinheit 6 abgelegt, so dass Sensorsignale 11, die vom Messsensor 5 an die Auswerteeinheit 6 abgegeben werden, mit dem dort hinterlegten Ablaufmuster der Winkelfolgen entlang der Längsrichtung LR verglichen zu werden. Hieraus werden Informationen bezüglich einer absoluten Lage des Messobjekts 2 gegenüber dem Messsensor 5 extrahiert.

Hinsichtlich der umfänglichen Erstreckung der Musterelemente 4a in Umfangsrichtung UR sind die oben erwähnten Aussagen auch auf das Anwendungsbeispiel gemäß Figur 4 ohne weiteres anwendbar. Ebenso können andere Ausführungsformen des Messobjekts 2, wie sie beispielsweise aber nicht abschließend im Rahmen der Beschreibung der Figuren 2 und 3 erwähnt wurden, auch in Anordnungen 1 gemäß der Figuren 1 und 4 Anwendung finden.

Als weitere Möglichkeit zur Modifikation der Messanordnung 1 sei auf eine Breite B oder eine Distanz D der Musterelemente 4a verwiesen. Die Breite B oder die Distanz D der Musterelemente 4a kann in Umfangsrichtung **UR** gesehen konstant sein oder variieren. Insbesondere kann beispielsweise eine zunehmende/abnehmende Breite B/Distanz D der einzelnen Musterelemente 4a eine Information darüber geben, in welcher rotatorischen Position sich das Messobjekt 2 in Umfangsrichtung **UR** relativ zum Messsensor 5 befindet.

Bei der erfindungsgemäßen Messanordnung 1 wird in besonders vorteilhafter Weise eine kontaktlose Sensierung mit einem Messsensor 5 eingesetzt, wobei der auszulesende Maßstab 3 in besonders geeigneter Art und Weise auch auf hochempfindliche und besonders glatte Oberflächen angebracht werden kann, ohne andere Oberflächenfunktionen nachhaltig zu beeinträchtigen.

Des Weiteren besteht die Möglichkeit, den Maßstab 3 bzw. die den Maßstab 3 bildenden Musterelemente 4a bzw. das gesamte magnetische Muster 4 in geeigneter Art und Weise, beispielsweise durch Lackieren, Beschichten oder Überkleben optisch abzudecken, ohne dass die Sensierbarkeit des Maßstabs 3 mit der erfindungsgemäßen Messanordnung 1 hierdurch behindert wird.

### Bezugszeichenliste

- 1: Messanordnung
- 2: Messobjekt
- 3: Maßstab
- 4: magnetisches Muster
- 4a: Musterelement
- 5: Messsensor
- 6: Auswerteeinheit
- 7: Anzeigeeinheit
- 8: Kolbenstange
- 9: Zylinderaktuator
- 10: Unterseite
- 11: Sensorsignal
- 12: Messwert
- 13: freie Außenseite

- LR: Längsrichtung
- L: Längsachse
- UR: Umfangsrichtung
- sₐ: Winkelbereich
- α: Winkel
- αₘₐₓ: maximaler Verdrehwinkel
- s_{αmax}: Winkelbereich
- B: Breite
- D: Distanz

## Patentansprüche

1. Messanordnung aufweisend wenigstens ein Messobjekt (2), einen Maßstab (3), einen Messsensor (5) und eine Auswerteeinheit (6), wobei das Messobjekt (2) entlang einer Längsrichtung (LR) eine Längsachse (L) aufweist, der Maßstab (3) ein magnetisches Muster (4) entlang einer Längsrichtung (LR) des Messobjekts (2) ist und der Messsensor (5) ausgebildet und eingerichtet ist, das magnetische Muster (4) zumindest teilweise in ein Sensorsignal (11) umzuwandeln, so dass aus dem Sensorsignal (11) mittels der Auswerteeinheit (6) ein Messwert (12) erzeugbar ist, wobei
das magnetische Muster (4) sich in einer Umfangsrichtung (UR) wenigstens über einen Winkelbereich (s_{α}) auf einer dem Messsensor (5) zugewandten Seite des Messobjekts (2) erstreckt, wobei zur Bildung des Winkelbereichs (s_{α}) ein Winkel (α) mindestens derart groß gewählt ist, dass bei einer Rotation des Messobjekts (2) um den Winkel (α) um seine Längsachse (L) das magnetische Muster (4) vom Messsensor (5) erfassbar ist, wobei das magnetische Muster (4) aus einer magnetischen Tinte gebildet ist und das magnetische Muster (4) aus umlaufenden Linien auf einer Außenseite des Messobjekts (2) gebildet ist,
derart, dass Linien des magnetischen Musters (4) gegenüber einer Ebene senkrecht zur Längsachse (L) des Messobjekts (2) mit zueinander unterschiedlichen Winkeln (β1, β2, β3, β4, ...) angeordnet sind.

2. Messanordnung nach Anspruch 1, **dadurch gekennzeichnet, dass** der Messsensor (5) ein magneto-resistiver Sensor, ein magneto-induktiver Sensor, ein Hallsensor oder ein Squid-Sensor, Saturationskern-Matrix-Sensoren, Förstersonden oder ein Lorenzkraft-Magnetometer/-sensor ist.

3. Messanordnung nach Anspruch 1 und/oder 2, **dadurch gekennzeichnet, dass** das Messobjekt (2) rotationsförmig stabartig, stangenartig oder scheibenartig ist, vorzugsweise ein Rundstab, insbesondere eine Kolbenstange einer Linearzylindereinrichtung ist.

4. Messanordnung nach einem der vorangegangenen Ansprüche, **dadurch gekennzeichnet, dass** das magnetische Muster (4) auf einer freien Außenseite (13) des Messobjekts (2) aufgebracht ist.

5. Messanordnung nach einem der vorangegangenen Ansprüche, **dadurch gekennzeichnet, dass** das magnetische Muster (4) mit einer Abdeckschicht überdeckt ist.

6. Messanordnung nach einem der vorangegangenen Ansprüche, **dadurch gekennzeichnet, dass** der Winkel (α) größer oder gleich gewählt ist als ein maximal im Betrieb des Messobjekts (2) auftretender Verdrehwinkel (αₘₐₓ) um die Längsachse (L).

7. Messanordnung nach einem der vorangegangenen Ansprüche, **dadurch gekennzeichnet, dass** der Winkel (α) 360° beträgt.

8. Messanordnung nach einem der vorangegangenen Ansprüche, **dadurch gekennzeichnet, dass** das magnetische Muster (4) aus mindestens einer Linie gebildet ist.

9. Messanordnung nach einem der vorangegangenen Ansprüche, **dadurch gekennzeichnet, dass** der Messsensor (5) als Ringsegment- oder Ringsensor ausgebildet ist, welcher in Umfangsrichtung (UR) um das Messobjekt (2) wenigstens einen Bereich, der in Umfangsrichtung (UR) gesehen größer oder gleich ist als der Winkelbereich (S_{αmax}), überdeckt.

10. Messanordnung nach einem der vorangegangenen Ansprüche, **dadurch gekennzeichnet, dass** das magnetische Muster (4) gleichmäßige oder ungleichmäßige Abstände, vorzugsweise in Form von Linien, zwischen den das magnetische Muster (4) bildenden Musterelementen (4a) hat.

11. Messanordnung nach einem der vorangegangenen Ansprüche, **dadurch gekennzeichnet, dass** das magnetische Muster (4) aus wenigstens einem Musterelement (4a) gebildet ist, welches vorzugsweise eine Linie, ein Punkt, ein Ring oder eine andersartig gestaltete Markierung sein kann.

12. Messanordnung nach einem der vorangegangenen Ansprüche, **dadurch gekennzeichnet, dass** die Musterelemente (4a) gleichmäßige oder ungleichmäßige Breiten (B) haben, wobei eine Breite (B) eine Erstreckung des wenigstens einen Musterelements (4a) in Richtung der Längsachse (L) ist.

## Claims

1. Measuring arrangement having at least one measuring object (2), a scale (3), a measuring sensor (5), and an evaluation unit (6), wherein the measuring object (2) has a longitudinal axis (L) along a longitudinal direction (LR), the scale (3) is a magnetic pattern (4) along a longitudinal direction (LR) of the measuring object (2), and the measuring sensor (5) is designed and arranged to convert the magnetic pattern (4) at least partially into a sensor signal (11) so that a measured value (12) can be generated from the sensor signal (11) by means of the evaluation unit (6), wherein
the magnetic pattern (4) extends in a circumferential direction (UR) over at least an angular range (s_{α}) on a side of the measurement object (2) facing the measuring sensor (5), wherein, to form the angular range (s_{α}), an angle (α) is selected to be at least large enough that when the measuring object (2) rotates around the angle (α) about its longitudinal axis (L), the magnetic pattern (4) can be detected by the measuring sensor (5), wherein
the magnetic pattern (4) is formed out of a magnetic ink and
the magnetic pattern (4) is formed out of circumferential lines on an outer side of the measuring object (2)
in such a way that lines of the magnetic pattern (4) are arranged at different angles (β1, β2, β3, β4, ...) to each other relative to a plane perpendicular to the longitudinal axis (L) of the measuring object (2).

2. Measuring arrangement of claim 1, **characterized in that** the measuring sensor (5) is a magneto-resistive sensor, a magneto-inductive sensor, a Hall sensor or a squid sensor, saturation core matrix sensors, Förster probes or a Lorentz force magnetometer/sensor.

3. Measuring arrangement of claim 1 and/or 2, **characterized in that** the measuring object (2) is rotary rod-like, bar-like or disc-like, preferably a round rod, in particular a piston rod of a linear cylinder device.

4. Measuring arrangement of one of the preceding claims, **characterized in that** the magnetic pattern (4) is applied to a free outer side (13) of the measuring object (2).

5. Measuring arrangement of one of the preceding claims, **characterized in that** the magnetic pattern (4) is covered with a covering layer.

6. Measuring arrangement of one of the preceding claims, **characterized in that** the angle (α) is selected to be greater than or equal to a maximum angle of rotation (αₘₐₓ) around the longitudinal axis (L) occurring during operation of the measuring object (2).

7. Measuring arrangement of one of the preceding claims, **characterized in that** the angle (α) is 360°.

8. Measuring arrangement of one of the preceding claims, **characterized in that** the magnetic pattern (4) is formed out of at least one line.

9. Measuring arrangement of one of the preceding claims, **characterized in that** the measuring sensor (5) is designed as a ring segment or ring sensor which covers at least one area around the measuring object (2) in the circumferential direction (UR) which, viewed in the circumferential direction (UR), is greater than or equal to the angular range (S_{αmax}).

10. Measuring arrangement of one of the preceding claims, **characterized in that** the magnetic pattern (4) has uniform or non-uniform spacing, preferably in the form of lines, between the pattern elements (4a) forming the magnetic pattern (4).

11. Measuring arrangement of one of the preceding claims, **characterized in that** the magnetic pattern (4) is formed out of at least one pattern element (4a), which may preferably be a line, a point, a ring, or a differently shaped marking.

12. Measuring arrangement of one of the preceding claims, **characterized in that** the pattern elements (4a) have uniform or non-uniform widths (B), wherein a width (B) is an extension of the at least one pattern element (4a) in the direction of the longitudinal axis (L).

## Revendications

1. Dispositif de mesure comprenant au moins un objet à mesurer (2), une échelle graduée (3), un capteur de mesure (5) et une unité d'évaluation (6), dans lequel l'objet à mesurer (2) présente un axe longitudinal (L) le long d'une direction longitudinale (LR), l'échelle graduée (3) est un modèle magnétique (4) le long d'une direction longitudinale (LR) de l'objet à mesurer (2) et le capteur de mesure (5) est configuré et prédisposé pour convertir le modèle magnétique (4) au moins en partie en un signal du capteur (11), de sorte qu'à partir du signal du capteur (11), il soit possible de générer une valeur de mesure (12) au moyen de l'unité d'évaluation (6), dans lequel
le modèle magnétique (4) s'étend dans une direction circonférentielle (UR) au moins sur une plage angulaire (Sα) sur un côté de l'objet à mesurer (2) tourné vers le capteur de mesure (5), dans lequel, pour former la plage angulaire (Sα), on choisit un angle (α) au moins suffisamment grand pour que, en cas de rotation de l'objet à mesurer (2) de l'angle (α) autour de son axe longitudinal (L), le modèle magnétique (4) puisse être détecté par le capteur de mesure (5), dans lequel
le modèle magnétique (4) est formé d'une encre magnétique et
le modèle magnétique (4) est formé de lignes circonférentielles sur un côté extérieur de l'objet à mesurer (2),
de sorte que les lignes du modèle magnétique (4) soient disposées par rapport à un plan perpendiculaire à l'axe longitudinal (L) de l'objet à mesurer (2) avec des angles différents les uns des autres (β1, β2, β3, β4, ...).

2. Dispositif de mesure selon la revendication 1, **caractérisé en ce que le** capteur de mesure (5) est un capteur magnétorésistif, un capteur magnéto-inductif, un capteur à effet Hall ou un capteur Squid, des capteurs à matrice à noyau saturé, des sondes de Forster ou un magnéto-mètre/capteur à force de Lorentz.

3. Dispositif de mesure selon la revendication 1 et/ou 2, **caractérisé en ce que** l'objet à mesurer (2) est de forme rotative, similaire à une tige, une barre ou un disque, de préférence une tige ronde, en particulier une tige de piston d'un dispositif cylindrique linéaire.

4. Dispositif de mesure selon l'une des revendications précédentes, **caractérisé en ce que** le modèle magnétique (4) est appliqué sur un côté extérieur libre (13) de l'objet à mesurer (2).

5. Dispositif de mesure selon l'une des revendications précédentes, **caractérisé en ce que** le modèle magnétique (4) est recouvert d'une couche de revêtement.

6. Dispositif de mesure selon l'une des revendications précédentes, **caractérisé en ce que** l'angle (α) est supérieur ou égal à un angle de rotation maximal (αₘₐₓ) qui est généré pendant le fonctionnement de l'objet à mesurer (2) autour de l'axe longitudinal.

7. Dispositif de mesure selon l'une des revendications précédentes, **caractérisé en ce que** l'angle (α) est égal à 360°.

8. Dispositif de mesure selon l'une des revendications précédentes, **caractérisé en ce que** le modèle magnétique (4) est constitué d'au moins une ligne.

9. Dispositif de mesure selon l'une des revendications précédentes, **caractérisé en ce que** le capteur de mesure (5) est configuré comme un segment annulaire ou un capteur annulaire qui couvre, dans la direction circonférentielle (UR) autour de l'objet à mesurer (2), au moins une plage qui, vue dans la direction circonférentielle (UR), est supérieure ou égale à la plage angulaire (S_{αmax}).

10. Dispositif de mesure selon l'une des revendications précédentes, **caractérisé en ce que** le modèle magnétique (4) présente des distances uniformes ou non uniformes, de préférence sous forme de lignes, entre les éléments de modèle (4a) qui forment le modèle magnétique (4).

11. Dispositif de mesure selon l'une des revendications précédentes, **caractérisé en ce que** le modèle magnétique (4) est constitué d'au moins un élément de modèle (4a), qui peut être de préférence une ligne, un point, un anneau ou un autre type de marquage.

12. Dispositif de mesure selon l'une des revendications précédentes, **caractérisé en ce que** les éléments de modèle (4a) ont des largeurs (B) uniformes ou non uniformes, dans lequel une largeur (B) est une extension d'au moins un élément de modèle (4a) dans la direction de l'axe longitudinal (L).
